# EUROPEAN PATENT APPLICATION

(11) **EP 1 349 162 A1**
(43) Date of publication of application: **01.10.2003**
(21) Application number: 02290740.6
(22) Date of filing: 25.03.2002
(51) Int. Cl.: G11B 17/04

(54) **Opening and closing mechanism for front panel in an electronic apparatus**

(71) Applicant: Thomson Licensing S.A., 92648 Boulogne Cedex (FR)
(72) Inventor: Low, Eng Choon, Tai Kok Tsui, West Kowloon, Hong Kong (CN); Mok, Raymond, Tsing Yi, N.T., Hong Kong (CN); Zeng, Zhi Ying, Huangpu, 510725 Guangzhou (CN)
(74) Representative: Rossmanith, Manfred, Dr.

(57) **Abstract**

The application discloses an opening and closing mechanism for a front panel used for an electronic equipment which comprises a housing. The opening and closing mechanism comprises a movable means and a driving means which is provided in said housing and drives said movable means to move towards or away from the housing. One end of the movable means is hinged to one of the lower and upper ends of the front panel, and the front panel is supported by the housing in such a manner that the other of the lower and upper ends of said front panel can move up and down. The movable means comprises two separate transversely spaced arms (11,11') which are hinged to the one end of the front panel respectively, and a synchronous transmission means (21,22) is disposed between said two arms so that the two arms can move synchronously. The opening and closing mechanism for a front panel of the invention can operate more accurately and reliably and can be used with the electronic equipment with a small size vertical direction.

## Description

### Field of the Invention

The invention relates to an opening and closing mechanism for a front panel used for an electronic equipment.

### Background of the Invention

The opening and closing mechanism for the front panel used for an electronic equipment is well known in the art. One example of such an opening and closing mechanism is disclosed in Japanese patent application publication No. 266560. The opening and closing mechanism disclosed in the Japanese application is located at the center of the electronic equipment, and comprises a motor and a transmission mechanism for driving a curved movable member which is connected to the front panel. The transmission mechanism comprises a gear which meshes with the racks formed on the curved moving member. When the motor operates, the movable member moves forwards or backwards in a curved path to open or close the front panel.

However, the opening and closing mechanism described above is arranged at the center of the electronic equipment in the horizontal direction and occupies large space in the vertical direction due to the movement path of the curved movable member, therefore it is not suitable for an electronic equipment having a small size in the vertical direction such as a DVD player and a CD player. Furthermore, since the moving member used in the conventional electronic equipment has a shape of arc, and the racks have to be formed on the curved surface of the moving member, resulting in an increase of the manufacturing cost.

### Summary of Invention

The invention is aimed to solve the above problems encountered with the conventional opening and closing mechanism, and to provide a opening and closing mechanism which can operate more accurately and reliably and by which the central space of the electronic equipment in the horizontal direction can be utilized effectively.

According to the present invention, there is provided an opening and closing mechanism for a front panel used for an electronic equipment which comprises a housing, the opening and closing mechanism comprising a movable means and a driving means which is provided in the housing and drives the movable means to move towards or away from the housing, one end of the movable means being hinged to one of the lower and upper ends of the front panel, and the front panel being supported by the housing in such a manner that the other of the lower and upper ends of the front panel can move up and down when the one end moves towards or away from the housing, the movable means comprising two separate transversely spaced arms which are hinged to the one end of the front panel respectively, and a synchronous transmission means being disposed between the two arms so that the two arms can move synchronously.

With the opening and closing mechanism for a front panel of the invention, two separate transversely spaced arms are used to drive the front panel, and a synchronous transmission means is provided between the two arms. Therefore, the movement of one arm is accurately transmitted to the other arm, the two arms can move synchronously. As a result, the performance and reliability of the opening and closing mechanism are improved. Furthermore, since the two arms are transversely spaced apart, the space between the two arms can be used to accommodate other components of the electronic equipment such as a disc-changer.

According to another aspect of the invention, each of the two arms comprises a rack, the synchronous transmission means comprises two synchronizing gears which respectively mesh with the corresponding racks and a shaft connecting the two synchronizing gears; and the synchronous transmission means is driven by one of the two racks. Since the synchronous transmission means comprises two gears and a shaft and is driven by one rack, the synchronous movement of the two racks can be achieved more accurately, and the synchronous transmission means can be arranged at any suitable location inside the housing of the electronic equipment.

### Brief Description of the Accompanying Drawings

The invention will be described in detail below in connection with the accompanying drawings, in which
Fig. 1 is a front view of an electronic equipment equipped with the opening and closing mechanism of the invention with the front panel being in a vertical and closed position;
Fig. 2 is a front view of an electronic equipment equipped with the opening and closing mechanism of the invention with the housing of the equipment removed to show the left and right holders;
Fig. 3 is a back perspective view showing the articulated juncture between the racks and the front panel;
Fig. 4 is a bottom perspective view showing the synchronous transmission means used in the opening and closing mechanism of the invention for synchronizing the left and right racks;
Fig. 5 is a schematic view showing the transmission mechanism disposed between the left rack and the motor;
Fig. 6 is a perspective view showing the belt drive unit of the transmission mechanism;
Fig. 7 is a perspective view showing the synchronizing gear;
Fig. 8 is a perspective view showing the drive shaft connecting the left and right synchronizing gears;
Fig. 9 is a front view of an electronic equipment equipped with the opening and closing mechanism of the invention with the front panel being at a horizontal and open position;
Fig. 10 a perspective view showing the open state of the front panel;
Fig. 11 a perspective view showing the arrangement of the opening and closing mechanism of the invention and the disc-changer in the housing of the electronic equipment;
Fig. 12 is a perspective view showing the left part of the opening and closing mechanism.

### Detailed Description of the Preferred Embodiments

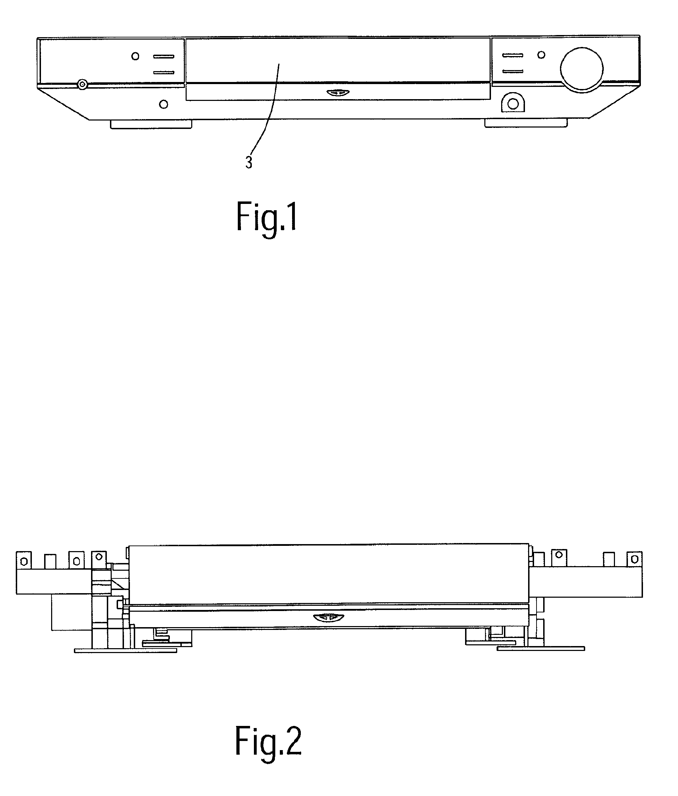

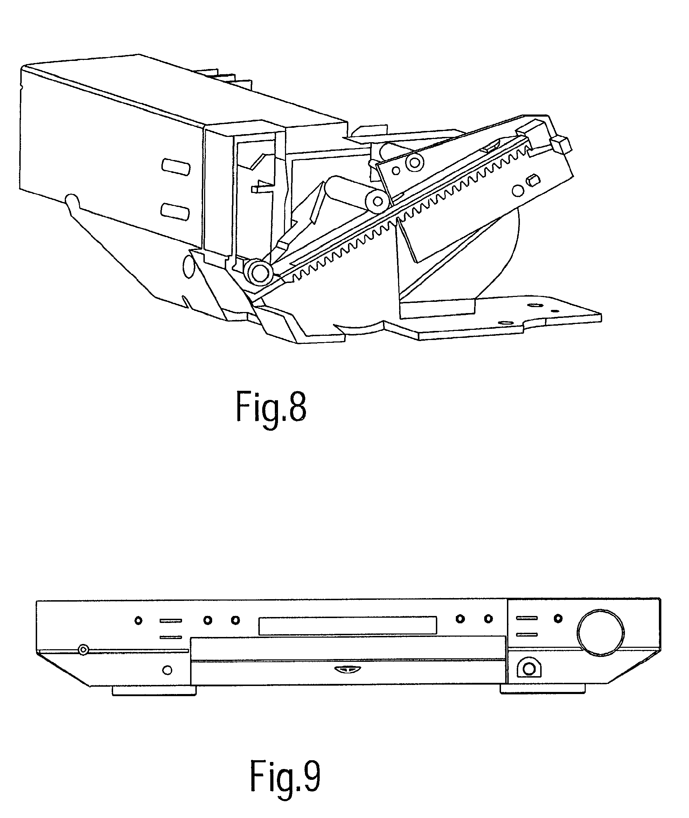

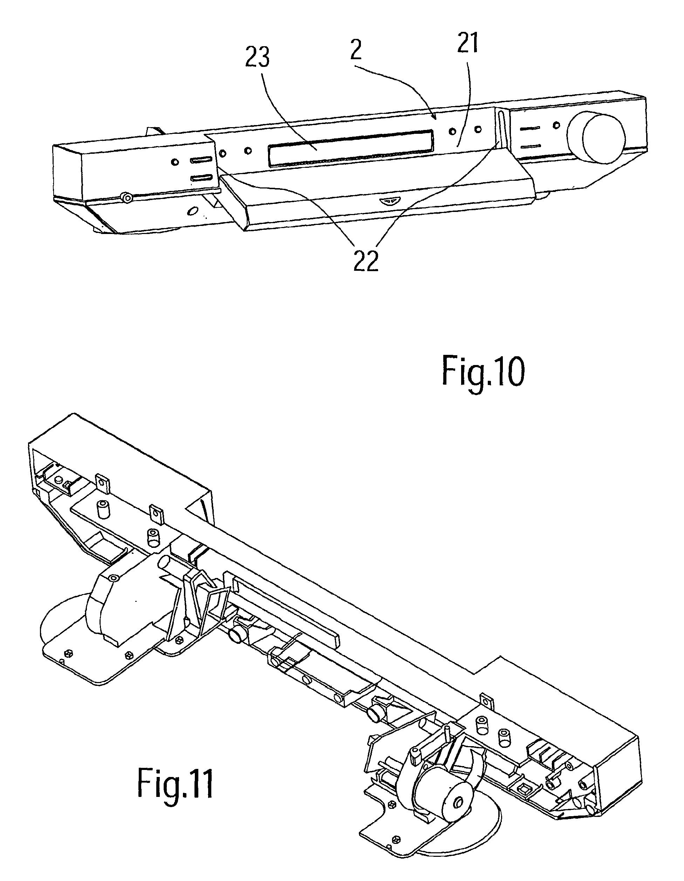

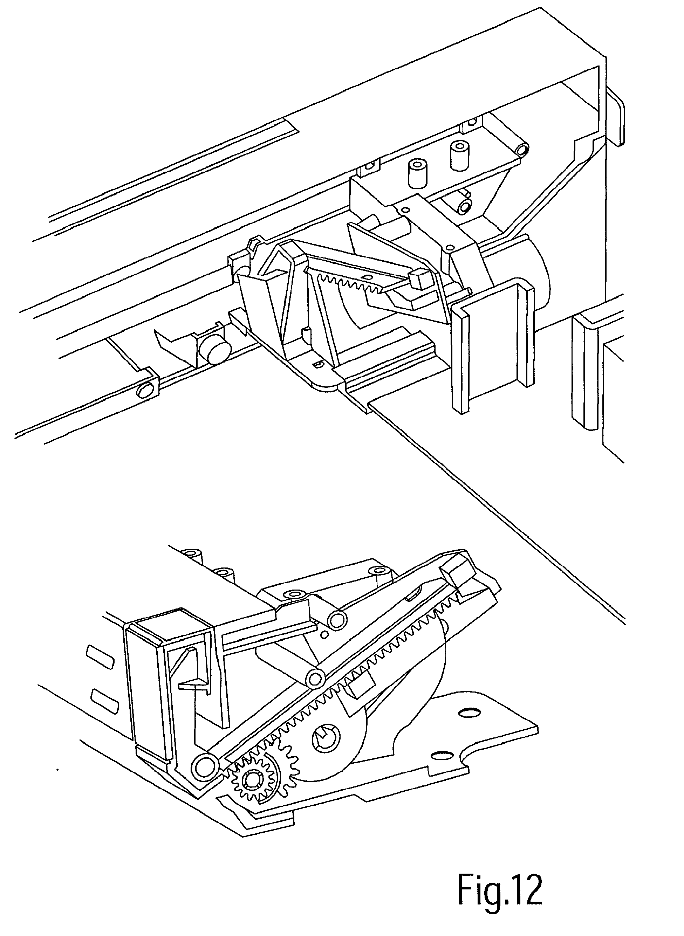

One preferred embodiment of the opening and closing mechanism in accordance with the invention will be described in connection with figs. 1-12. Reference is first made to fig. 1 which shows the appearance of an electronic equipment such as a DVD player, a CD player and etc with a front panel. The electronic equipment comprises a housing 1, a concave portion 2 is formed on the front surface of the housing as shown in figs. 10 and 11, and a front panel 3 is arranged in the concave portion 2. The concave portion 2 comprises a bottom surface 21 and two side surfaces 22 which are on the left and right sides of the bottom surface respectively. As shown in fig. 10, on the bottom surface 21 of the concave portion, an opening 23 is formed for a disc-changer, and other functional buttons can also be selectively provided on the bottom surface. The front panel 3 can move between an open position and a close position by means of an opening and closing mechanism of the invention. At the open position, the front panel moves away from the concave portion 2 so as to expose the opening 23 and the buttons as shown in fig. 10; and at the close position, the front panel 3 covers the bottom surface 21 as shown in fig. 1.

The opening and closing mechanism for the front panel used for an electronic equipment will be described below.

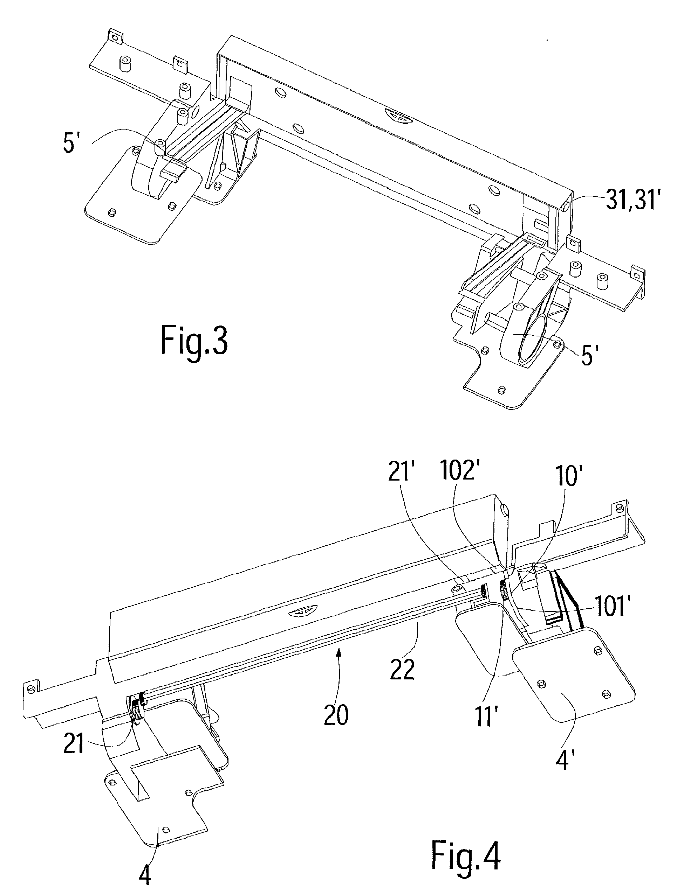

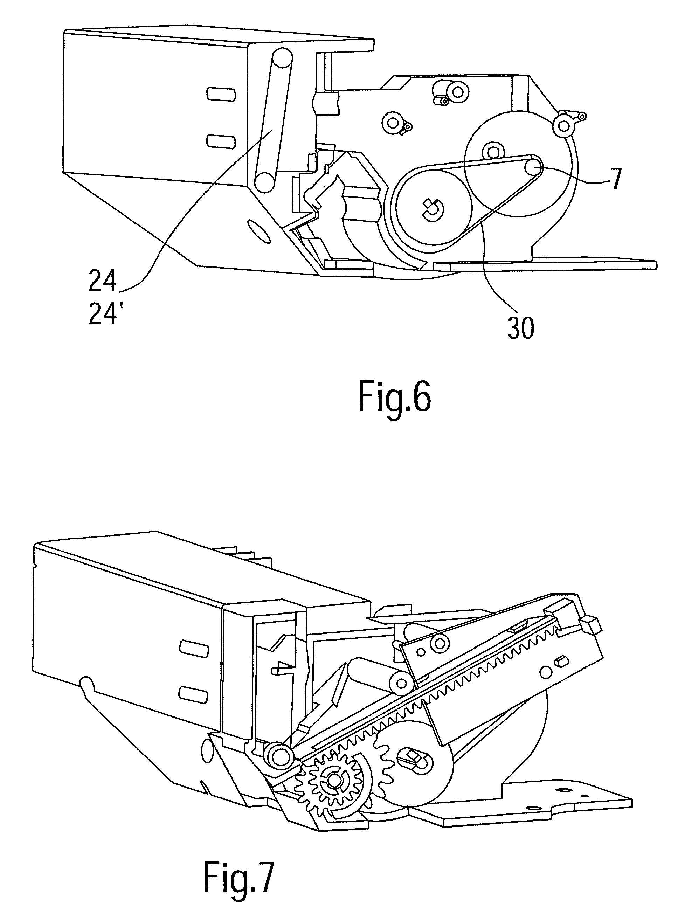

As shown in fig. 6, slots 24, 24' are formed in the right and left side surfaces 22 of the concave portion 2, the slots 24, 24' extends downwards and forwards. As shown in fig. 3, cylindrical pins 31, 31' are provided on the upper portion of the right and the left ends of the front panel 3, the cylindrical pins 31, 31' extend in the transverse direction of the electronic apparatus and are inserted into the corresponding slots 24, 24' so as to slide along the slots during opening and closing operation of the front panel.

As shown in figs. 2-4 and 11, two holders 4, 4' are provided inside the housing 1 and are located respectively on the right and left sides of the front panel 3, and the holders are fixed relative to the housing 1. Each of the holders has a vertical attachment plate 5, 5' to which various components of the opening and closing mechanism are attached.

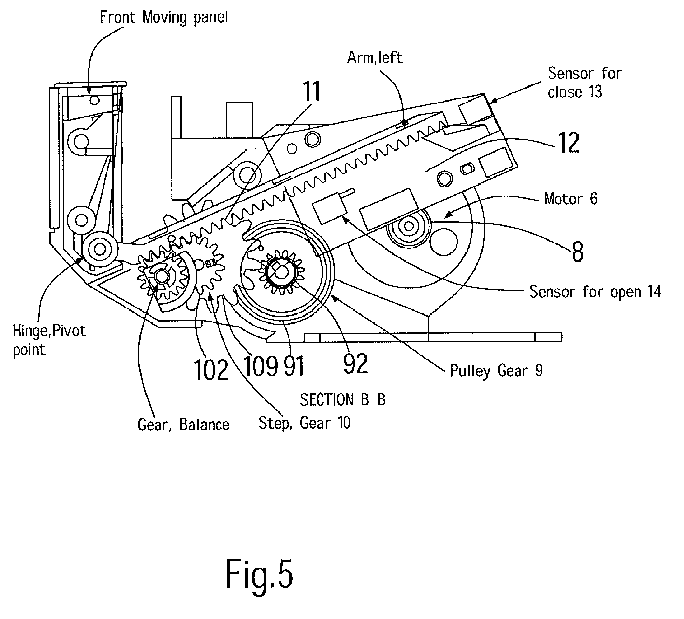

As shown in figs. 5, 6 and 11, a motor 6 is attached to the vertical attachment plate 5 of the left holder 4 on the outer side of the attachment plate, the driving shaft 7 of the motor extends through a hole formed in the vertical attachment plate 5, and a small pulley 8 is attached to the driving shaft 7 at its end. A pulley-gear component 9 is attached via a gear shaft to the vertical attachment plate 5 on the inner side and is located on the forward and downward side relative to the small pulley 8. The pulley-gear component 9 consists of a large pulley 91 and a gear 92. A belt 30 passes over the small pulley 8 and the large pulley 91, so that torque generated by the motor 6 can be transmitted from the small pulley 8 to the large pulley 91. Since the gear 92 is integral with the large pulley 91, the gear 92 will rotate together with the large pulley 91 in the same direction when the motor 6 operates. A left stepped gear 10 is attached to the vertical attachment plate 5 of the left holder 4 via a gear shaft and is located forward of the pulley-gear component 9, the left stepped gear 10 consists of a large gear 101 and a small gear 102. The large gear 101 meshes with the gear 92 and the small gear 102 meshes with a left rack 11. As shown in figs. 5 and 7, the left rack 11 inclines forwards and downwards, its forward end is hinged to the front panel 3 at the bottom of the front panel. Also attached to the left holder 4 is a control panel 12 on which there are provided two sensors for detecting the closing and the opening of the front panel 3. The sensor 13 for detecting closing is located on the backward and upward side relative to the sensor 14 for detecting the opening of the front panel.

Similarly, as shown in figs. 3 and 4, a right stepped gear 10' is attached to the vertical attachment plate 5' of the right holder 4' via a gear shaft. Like the left stepped gear 10, the right stepped gear 10' also consists of a large gear 101' and a small gear 102' which meshes with a right rack 11', thus the right stepped gear is a driven gear which is driven to rotate by the right rack 11'. Like the left rack 11, the right rack 11' inclines forwards and downwards, its forward end is hinged to the front panel 3 at the bottom of the front panel. Therefore, the front panel can pivot about the hinge pin relative to the left and right racks.

Furthermore, the opening and closing mechanism for the front panel in accordance with the invention further comprises a synchronous transmission means 20 which comprises a left synchronizing gear 21, a right synchronizing gear 21' and a shaft 22 connecting the left and right synchronizing gears, as shown in figs 4 and 5. The left synchronizing gear 21 meshes with the left rack 11 and the right synchronizing gear 21' meshes with the right rack 11'. As shown in figs. 4, 5, 7, 8 and 12, the shaft 22 has a cross section of T-shape, and is supported by two supports 40, 40' arranged respectively on the left and right sides of the front panel, the left and right synchronizing gears 21, 21' are attached to the left and right ends of the shaft 22 respectively.

The operation of the opening and closing mechanism for the front panel in accordance with the invention will be described herein below.

When the opening and closing mechanism is at a closed position as shown in fig. 1 and the opening and closing button for the front panel 3 is pushed, the motor 6 will operate and rotate clockwise when seen in fig. 5. Accordingly, the small pulley 8, which is attached to the driving shaft 7 of the motor, will rotate in the same direction and drive the large pulley 91 to rotate in the same direction via the belt 30, thereby the gear 92, which is integral with the large pulley 91, will rotate clockwise. And the large gear 101 of the left stepped gear 10, which meshes with the gear 92, will rotate counterclockwise together with the small gear 102. Since the small gear meshes with the left rack 11, the left rack will move forwards and downwards.

On the other hand, since the left synchronizing gear 21 meshes with the left rack 11, the left synchronizing gear will rotate counterclockwise when the left rack 11 moves forwards. The right synchronizing gear 21', which is connected to the left synchronizing gear 21 via the shaft 22, will rotate in the same direction and at the same speed as the left synchronizing gear 21. As a result, the right rack 11', which meshes with the right synchronizing gear 21', and the left rack 11 will move forwards and downwards synchronously. Since the small gear 102' of the right stepped gear 10' meshes with the right rack 11', the right stepped gear 10' will rotate counterclockwise when the right rack 11' moves forwards and downwards. By the engagement of the right stepped gear 10' with the right rack 11', the right rack can move more stably. Thus, the right stepped gear also functions as a support for the right rack to improve the moving stability of the right rack. Since the left and right racks are hinged to the front panel 3 at the bottom of the front panel, the lower end of the front panel will move forwards and downwards, and the pins 31, 31' on the left and right ends of the front panel will slide along the slots 24, 24' in the side surfaces of the concave portion 2. Therefore, the front panel will pivot about the hinge pin clockwise while its upper end moves downwards, thus opening the front panel.

When the front panel is fully opened, the sensor 14 for detecting the opening will send a signal, and the operation of the motor 6 will be stopped in response to the signal send out from the sensor. Once the front panel is opened, the user may operate the buttons on the bottom surface of the concave portion to carry out further operations.

When it is necessary to close the front panel, the user may push the opening and closing button for the front panel. Accordingly, the motor will rotate counterclockwise, and so will the small pulley 8, the large pulley 91 and the gear 92. As a result, the small gear 102 of the left stepped gear 10 will rotate clockwise to drive the left rack 11 to move upwards and backwards. Similarly, the right rack 11' will also move upwards and backwards to pull the lower end of the front panel backwards and upwards. The front panel will rotate counterclockwise about the hinge pin while its upper end moves upward along the slots until the front panel is closed. When the front panel is closed, the sensor 13 for detecting closing will send a signal, and the operation of the motor will be stopped in response to the signal sent out from the sensor.

One preferred embodiment of the opening and closing mechanism for the front panel in accordance with the invention has been described above in connection with the accompanying drawings. However, it will be appreciated by the person skilled in the art that the invention is not restricted to the specific embodiment, and various modifications can be made to the embodiment without departing from the scope and spirit of the invention.

In the preferred embodiment, the transmission mechanism comprises a small pulley, a belt, a pulley-gear component and a steeped gear. Obviously, such a transmission mechanism can be replaced by other transmission mechanism which can achieve the same function.

In the preferred embodiment, the front ends of the two racks are hinged to the front panel at the bottom of the front panel; and the upper end of the front panel is guided by the slots formed in the side surfaces of the concave portion via the cylindrical pins provided on the left and right ends. However, the opening and closing mechanism can also be constructed as such that the front ends of the two racks are hinged to the front panel at the top of the front panel, while the lower end of the front panel is guided by the slots formed in the side surfaces of the concave portion via the cylindrical pins provided on the lower portion of the left and right ends.

In the preferred embodiment, a right stepped gear 10', which has a small gear 102' that meshes with the right rack 11', is provided to improve the moving stability of the right rack 11'. However, the right stepped gear may be omitted without affecting the function of the opening and closing mechanism.

Furthermore, a shaft can be additionally provided which connects the small gears 102, 102' of the left and right stepped gears 10, 10'. Thus, the small gears 102, 102', which are used as synchronous gears in this case, and such a shaft can be used as a synchronous transmission means to replace the synchronous means which is composed of the left and right synchronous gears 21, 21' and the drive shaft 22.

## Claims

1. An opening and closing mechanism for a front panel used for an electronic equipment which comprises a housing, the opening and closing mechanism comprising a movable means and a driving means which is provided in said housing and drives said movable means to move towards or away from the housing, one end of said movable means being hinged to one of the lower and upper ends of the front panel, and the front panel being supported by the housing in such a manner that the other of the lower and upper ends of said front panel can move up and down, **characterized in that** said movable means comprising two separate transversely spaced arms which are hinged to said one end of said front panel respectively, and a synchronous transmission means being disposed between said two arms so that said two arms can move synchronously.

2. The opening and closing mechanism as claimed in claim 1, wherein each of said two arms comprises a rack, said synchronous transmission means comprises two synchronizing gears which respectively mesh with the corresponding racks and a shaft connecting said two gears.

3. The opening and closing mechanism as claimed in claim 2, wherein said synchronous transmission means is driven by one of said two racks.

4. The opening and closing mechanism as claimed in claim 2, wherein said driving means comprises a motor and a transmission mechanism provided between the motor and one of said racks, said transmission mechanism comprises the synchronizing gear which meshes with said one rack.

5. The opening and closing mechanism as claimed in claim 3, wherein said driving means comprises a motor and a transmission mechanism provided between the motor and said one rack, said transmission mechanism comprises a drive gear which meshes with and drives said one rack.

6. The opening and closing mechanism as claimed in claim 5, wherein said opening and closing mechanism further comprises a driven gear which meshes with the other rack.

7. The opening and closing mechanism as claimed in any one of the preceding claims, wherein said two arms are hinged to the lower end of the front panel and incline forwards and downwards.

8. The opening and closing mechanism as claimed in any one of claims 1-6, wherein said housing is formed with a concave portion on its front surface, said concave portion has a bottom surface and two side surfaces, each of the side surfaces of the housing is formed with a slot, and the upper portion of each of the transverse ends of the front panel is provided with a cylindrical pin, said cylindrical pins are inserted into the corresponding slots.
